# EUROPÄISCHE PATENTANMELDUNG

(11) **EP 4 295 662 A1**
(43) Veröffentlichungstag der Anmeldung: **27.12.2023**
(21) Anmeldenummer: 22180504.7
(22) Anmeldetag: 22.06.2022
(51) Int. Cl.: A01D 78/10

(54) **BÜRSTENZINKEN FÜR EINEN KREISELSCHWADER**

(71) Anmelder: Kverneland Group Kerteminde AS, 5300 Kerteminde (DK)
(72) Erfinder: GOHL, Stefan, 78244 Gottmadingen (DE); BICKMANN, Christian, 78244 Gottmadingen (DE); SALZER, Henning, 78244 Gottmadingen (DE)
(74) Vertreter: Grünecker Patent- und Rechtsanwälte PartG mbB

(57) **Zusammenfassung**

Beschrieben wird ein Bürstenzinken (1) für einen Kreiselschwader (31), umfassend einen Doppelzinken (2) und eine Halterung (3, 16, 18) zur Befestigung des Doppelzinkens an einem Zinkenträger (4), wobei der Bürstenzinken (1) derart ausgebildet ist, dass die freien Endabschnitte (2c) des Doppelzinkens (2) in nach unten geschwenkter Arbeitsstellung des Bürstenzinkens einen stumpfen Anstellwinkel (13) mit einer horizontalen Arbeitsrichtung (10) aufspannen, und wobei die Halterung (3, 16, 18) und der Doppelzinken (2) zur gegenseitigen linearen Höhenverstellung (9) ausgebildet sind. Dadurch lässt sich der Bürstenzinken (1) auf eine an die jeweiligen Bodengegebenheiten angepasste Zustellung (8) bezüglich der Federzinken (5) und an einen bestehenden Abnutzungsgrad anpassen, um Erntegut (21) aus Bodenvertiefungen schonend und zuverlässig aufzunehmen.

## Beschreibung

Die Erfindung betrifft einen Bürstenzinken für einen Kreiselschwader sowie, diesen jeweils umfassend, eine Zinkenanordnung und einen Kreiselschwader.

Kreiselschwader umfassen bekanntermaßen wenigsten einen um eine aufrechte Achse drehbaren Rotor mit davon nach außen abstehenden Zinkenträgern, auch Zinkenarme genannt, an denen Rechenzinken, der Einfachheit halber nachfolgend auch Federzinken genannt, gruppiert sind, um Erntegut mit den Federzinken aufzunehmen und in einen Schwad zu fördern. Hierzu werden die Federzinken üblicherweise so am Zinkenträger angeordnet, dass die freien Zinkenenden einer jeweils am Zinkenträger zusammengefassten Zinkenanordnung in ihrer (nach unten geschwenkten) Arbeitsstellung einen möglichst einheitlichen und konstanten Abstand zum Boden einhalten. Bei einem idealerweise ebenen Bodenprofil wird auf diese Weise in der Regel das beste Arbeitsergebnis erzielt. Das heißt, es treten nur geringe Erntegutverluste / Futterverluste und geringe Erntegutverschmutzung / Futterverschmutzung durch Ascheeintrag auf.

Bei unebenem Bodenprofil ist eine derartige Zinkenanordnung jedoch nachteilig. Es kommt dann zur Futterverschmutzung und/oder Futterverlusten. Letztere führen nicht nur zu Ertragseinbußen, sondern reduzieren auch die Futterqualität bei nachfolgenden Grasschnitten, wenn zurückgebliebene Erntereste halb verrottet eingetragen werden. Beispielsweise wird das Erntegut bei weicher Stoppel und feuchtem Boden von den Stollenreifen der Schlepperräder in den Boden gedrückt, von den Federzinken dann nicht ausreichend oder gar nicht aufgenommen und somit auch nicht in den Schwad gefördert. Derartige Futterverluste / Erntereste bleiben im Feld zurück, verrotten nur teilweise und verursachen beispielsweise Schimmelpilzeintrag bei der nächsten Ernte. Dies ist für die Futterqualität und die Gesundheit der damit versorgten Tiere nachteilig.

Zwar ist aus der EP 2 340 704 A1 eine Zinkenanordnung für einen Kreiselschwader bekannt, bei der die einzelnen Federzinken unterschiedlich lange und unterschiedlich steil angestellte Zinkenschenkel aufweisen, damit von den jeweils vorauseilenden Zinkenschenkeln liegengelassenes Halmgut von nacheilenden Zinkenschenkeln mit größerer Länge aufgenommen werden kann. Die Anordnung von Zinkenschenkeln unterschiedlicher Formgebung und Länge ist hierbei festgelegt, um die Menge insgesamt erfassten Halmguts bezogen auf ein ebenes Bodenprofil zu optimieren.

Es besteht demgegenüber jedoch weiterhin Verbesserungsbedarf, um die eingangs geschilderte Problematik bei unebenen Bodenprofilen abzumildern.

Die gestellte Aufgabe wird mit einem Bürstenzinken nach Anspruch 1 gelöst, ebenso mit einer Zinkenanordnung, die wenigstens einen erfindungsgemäßen Bürstenzinken umfasst, und mit einem Kreiselschwader, an dessen Zinkenträger erfindungsgemäße Bürstenzinken angeordnet sind. Bevorzugte Ausführungsformen sind in den Unteransprüchen angegeben.

Demnach eignet sich der Bürstenzinken für einen Kreiselschwader und umfasst einen Doppelzinken und eine Halterung zur Befestigung des Doppelzinkens an einem Zinkenträger. Der Bürstenzinken ist derart ausgebildet, dass die freien Endabschnitte des Doppelzinkens in nach unten geschwenkter Arbeitsstellung des Bürstenzinkens einen stumpfen Anstellwinkel mit einer als horizontal angenommenen Arbeitsrichtung aufspannen, wobei die Halterung zur linearen (nicht schwenkenden) Höhenverstellung des Doppelzinkens beispielsweise durch Verschieben ausgebildet ist.

Der wenigstens eine Bürstenzinken kann zusätzlich zu obligatorisch vorhandenen Federzinken / Rechenzinken am Zinkenträger angeordnet werden, um von den Feder-/ Rechenzinken liegengelassenes Erntegut / Halmgut auch aus Bodenvertiefungen heraus aufzunehmen und in den Schwad zu fördern.

Der Bürstenzinken kann mittels der Halterung hinter dem oder den zugeordneten Federzinken / Rechenzinken, also jeweils nachlaufend, am Zinkenträger angeordnet werden. Die Federzinken können hierbei eine bekannte Bauform aufweisen.

Die Höhenverstellung ermöglicht es, eine Zustellung des Bürstenzinkens, also dessen Überstand nach unten über wenigstens einen zugeordneten Feder-/ Rechenzinken an unterschiedliche Bodenprofile, insbesondere an die Tiefe vorhandener Bodenunebenheiten, anzupassen. Durch die Höhenverstellung kann zudem eine bestehende Abnutzung der Doppelzinken, also eine durch den Arbeitsbetrieb verursachte Verkürzung seiner freien Zinkenenden, ausgeglichen werden.

Der Bürstenzinken lässt sich mit der Halterung somit optional am Zinkenträger im Sinne einer Zusatzausstattung anordnen, wobei Ernte-/ Halmgut dank der Höhenverstellung dann auch bei unterschiedlichem Abnutzungsgrad der Doppelzinken und/oder unterschiedlichen Bodenprofilen insbesondere aus Bodenvertiefungen, wie beispielsweise aus Schlepperspuren, besser aufgenommen und in einen Schwad transportiert werden kann.

Angaben zur Ausrichtung des Bürstenzinkens und seiner Bestandteile, wie beispielsweise "nachlaufend" oder "Anstellwinkel", beziehen sich zum besseren Verständnis auf eine vorgesehene idealisierte Arbeitsrichtung (der freien Enden) entlang einer horizontalen Kreisbahn.

Vorzugsweise umfasst die Halterung einen ersten Befestigungsabschnitt zur Befestigung der Halterung am Zinkenträger und einen bezüglich des ersten Befestigungsabschnitts im Arbeitsbetrieb nachlaufenden zweiten Befestigungsabschnitt zur Befestigung des Doppelzinkens an der Halterung. Dadurch wird eine einfache Befestigung des Bürstenzinkens am Zinkenträger im Bereich wenigstens eines zugeordneten Federzinkens ermöglicht, insbesondere an den Befestigungspunkten der Federzinken gemeinsam mit diesen. Dadurch kann der Bürstenzinken optional und auf vergleichsweise einfache Weise hinter wenigstens einem Federzinken nachlaufend angeordnet werden, beispielsweise durch Festschrauben des ersten Befestigungsabschnitts.

Vorzugsweise ist dann der zweite Befestigungsabschnitt zur Höhenverstellung des Doppelzinkens ausgebildet. Dies vereinfacht eine Anpassung des ersten Befestigungsabschnitts an die Formgebung wenigstens eines zugeordneten Federzinkens und seines Befestigungspunkts. Die Höhenverstellung ist dann diesbezüglich entgegen Arbeitsrichtung nach hinten versetzt sowohl ohne Kollision von Bürstenzinken und Federzinken als auch auf ergonomische Weise möglich.

Vorzugsweise ist der erste Befestigungsabschnitt im Bereich des Zinkenträgers bezüglich einer als horizontal angenommenen Arbeitsrichtung in einem Winkel von höchstens 30° und insbesondere horizontal ausgerichtet, wobei der zweite Befestigungsabschnitt im Bereich der Höhenverstellung dann bezüglich horizontaler Arbeitsrichtung in einem Winkel von 60 bis 90° und insbesondere vertikal ausgerichtet ist. Die Halterung kann so beispielsweise auf vergleichsweise einfache und kostengünstige Weise als Verstellwinkel ausgebildet werden, wobei der zweite Befestigungsabschnitt dann als aufrecht verlaufender Schenkel des Verstellwinkels ausgebildet ist und eine einfache Linearverstellung entlang dieses Schenkels ermöglicht.

Vorzugsweise ist an der Halterung und dem Doppelzinken zur gegenseitigen Höhenverstellung eine arretierbare Linearführung insbesondere mit bzw. in Form einer Langloch-Verschraubung ausgebildet. Unter der linearen Führung ist hier zu verstehen, dass sich der Anstellwinkel des Doppelzinkens, also sein Neigungswinkel bezüglich horizontaler Arbeitsrichtung, bei der Höhenverstellung nicht ändert. Denkbar ist beispielsweise eine vertikal und quer zur Arbeitsrichtung ausgerichtete ebene Platte, in der ein von oben nach unten verlaufendes Langloch ausgebildet ist. Dieses führt beispielsweise einen verschiebbaren Gewindebolzen im Sinne eines Schlittens, der am Langloch durch eine Schraubverbindung in unterschiedlichen Höhenlagen festgeklemmt werden kann, insbesondere diesbezüglich stufenlos verstellbar.

Beispielsweise ist das Langloch dann am zweiten Befestigungsabschnitt der Halterung von oben nach unten verlaufend ausgebildet. Darin kann ein den Doppelzinken haltender Gewindebolzen verschoben und mittels einer Mutter in geeigneter Höhenlage festgeschraubt werden. Ebenso wäre eine im Langloch verschiebbare Mutter mit zugehöriger Befestigungsschraube möglich.

Eine Langloch-Verschraubung ist nicht nur einfach und kostengünstig herzustellen, sondern auch robust. Alternativ wären aber auch andere Verstellmechanismen denkbar, beispielweise ineinandergreifende Schienen an Doppelzinken und Halterung mit einem gemeinsamen Feststellmechanismus, wie beispielsweise einer Verschraubung oder einer Klemmung, oder ein Spindeltrieb.

Bei einer anderen günstigen Ausführungsform umfasst die Halterung ein Klemmstück und eine sowohl dieses als auch den Zinkenträger durchdringende Horizontalverschraubung zum höhenveränderlichen Festklemmen einer vom Doppelzinken umfassten und in der abgesenkten Arbeitsstellung des Bürstenzinkens im Wesentlichen vertikal verlaufenden Befestigungsschlaufe am Zinkenträger. Unter der Horizontalverschraubung ist eine Verschraubung zu verstehen, deren Gewindebolzen / Steckschraube in der Arbeitsstellung (s.o.) im Wesentlichen horizontal ausgerichtet ist.

Die Höhenverstellung und die Zustellung des Bürstenzinkens ist so mit einer minimalen Anzahl von Befestigungselementen möglich, nämlich mittels eines zwischen dem Doppelzinken und dem Zinkenträger angeordneten Klemmstück und mittels einer den Zinkenträger, das Klemmstück und eine Befestigungsschlaufe des Doppelzinkens durchdringenden und zusammenziehenden Verschraubung.

Vorzugsweise ist die Halterung zur Höhenverstellung über einen Verstellbereich von 20 bis 60 mm (Verstellbereich beträgt beispielsweise +/- 10 bis +/- 30 mm) und insbesondere von 30 bis 50 mm (Verstellbereich beträgt beispielsweise +/- 15 bis +/-25 mm) ausgebildet. Darunter ist zu verstehen, dass die Höhenlage des Doppelzinkens insgesamt bezüglich idealisiert horizontaler Arbeitsebene (Boden) über diesen Bereich verstellt werden kann, insbesondere stufenlos. Damit lässt sich die Zustellung des Bürstenzinkens zum einen an zu erwartende Bodenunebenheiten anpassen und zudem eine Abnutzung des Bürstenzinkens kompensieren.

Vorzugsweise weist der Doppelzinken Zinkenschenkel mit identischer Länge und insbesondere mit identischer Formgebung auf. Es hat sich herausgestellt, dass damit ein besonders guter Austrag von Erntegut / Halmgut aus Bodenvertiefungen insbesondere auch dann möglich ist, falls an jedem Zinkenträger nur ein einziger nachlaufender Bürstenzinken angeordnet wird. Anders gesagt lässt sich dadurch die Anzahl benötigter Bürstenzinken pro Zinkenträger minimieren.

Bei einerweiteren günstigen Ausführungsform hat der (bezüglich eines vorgesehen umlaufenden Arbeitsbetriebs am Zinkenträger) äußere Zinkenschenkel des Bürstenzinkens eine höhere Federsteifigkeit als der innere Zinkenschenkel. Dadurch lässt sich verhindern, dass der äußere Zinkenschenkel im Arbeitsbetrieb auf unerwünschte Weise stärker nach hinten gebogen wird als der innere Zinkenschenkel. Unterschiedliche Federsteifigkeit der Zinkenschenkel lässt sich beispielswiese dadurch erzielen, dass diese an ihrem gemeinsamen befestigungsseitigen Ende unterschiedliche viele Federwindungen aufweisen.

Die Zinkenschenkel bestehen beispielsweise aus einem Federstahl mit einem Durchmesser von 8 mm oder 10 mm.

Der Bürstenzinken gemäß wenigstens einer der beschriebenen Ausführungsformen kann in vorteilhafter Weise Bestandteil einer Zinkenanordnung für einen Kreiselschwader sein, wobei die Zinkenanordnung dann nebeneinander angeordnete Federzinken / Rechenzinken aufweist, der Bürstenzinken den Federzinken nachlaufend angeordnet ist und eine geringere Federsteifigkeit aufweist als die Federzinken.

Zu diesem Zweck kann der Bürstenzinken Zinkenschenkel mit geringerem Querschnitt aufweisen als die Federzinken. Ebenso kann der Bürstenzinken befestigungsseitig eine größere Anzahl von Federwindungen aufweisen als die Federzinken. Der wenigstens eine Bürstenzinken kann so von den Federzinken nicht aufgenommenes Erntegut / Halmgut aus Bodenvertiefungen aufnehmen und in ein Schwad fördern.

Vorzugsweise ist der Anstellwinkel des Bürstenzinkens (bezogen auf eine als horizontal angenommene Arbeitsrichtung) in der abgesenkten Arbeitsstellung der Zinkenanordnung größer als die Anstellwinkel der Federzinken. Dies bezieht sich auf die freien Zinkenenden und begünstigt eine zuverlässige Aufnahme von Erntegut / Halmgut bei nachlaufender Anordnung des Bürstenzinkens.

Vorzugsweise ist der Bürstenzinken für eine in der Arbeitsstellung über die Federzinken nach unten überstehende Zustellung von wenigstens 10 mm ausgebildet. Damit lassen sich aus in der Praxis häufig auftretenden Bodenvertiefungen, wie beispielsweise Schlepperspuren, zuverlässig von den vorauslaufenden Federzinken liegengelassene Reste von Erntegut / Halmgut aufnehmen und ins Schwad fördern.

Vorzugsweise ist der (oder einer der) Bürstenzinken an Befestigungspunkten für die innersten beiden Federzinken gemeinsam mit diesen am Zinkenträger befestigt. Dies ermöglicht eine einfache nachträgliche Befestigung des Bürstenzinkens als optionale Zusatzausstattung. Zudem hat sich herausgestellt, dass ein im Bereich des innersten Zinkenkreises angeordneter Bürstenzinken vergleichsweise wenig Schmutz aufnimmt und mit dem Erntegut / Halmgut ins Schwad fördert. Der Bürstenzinken kann so mit relativ aggressiver Zustellung, also vergleichsweise weit über die Federzinken überstehend, am Zinkenträger angeordnet werden. Somit kann Erntegut / Halmgut effektiv und mit geringer Verschmutzung aus Bodenvertiefungen aufgenommen werden.

In vorteilhafter Ausgestaltung umfasst ein Kreiselschwader mit mehreren Zinkenträgern daran angeordnete Bürstenzinken und/oder Zinkenanordnungen gemäß wenigstens einer der beschriebenen Ausführungsformen.

Die Zinkenträger können einen entgegen der Arbeitsrichtung abgewinkelten äußeren Endbereich aufweisen, in dem die Bürstenzinken angeordnet sind, wobei die freien Endabschnitte der Doppelzinken in nach unten geschwenkter Arbeitsstellung bezüglich eines inneren Endbereichs der Zinkenträger zur Lagerung am zugeordneten Rotor nachlaufend angeordnet sind.

Bevorzugte Ausführungsformen der Erfindung sind zeichnerisch dargestellt. Es zeigen:
- Figur 1A und 1B: eine seitliche Ansicht einer Zinkenanordnung mit dem Bürstenzinken mit unterschiedlicher Zustellung;
- Figur 2: eine Vorderansicht der Zinkenanordnung gemäß Figur 1;
- Figur 3: eine Draufsicht auf einen Teil der Zinkenanordnung gemäß Figur 1A, 1B und 2;
- Figur 4: eine Schrägansicht einer alternativen Zinkenanordnung mit dem Bürstenzinken;
- Figur 5: Ansichten des Bürstenzinkens mit einer alternativen Halterung;
- Figur 6: eine schematische Darstellung der Wirkungsweise des Bürstenzinkens; und
- Figur 7: eine schematische Draufsicht auf einen Kreiselschwader im Arbeitseinsatz.

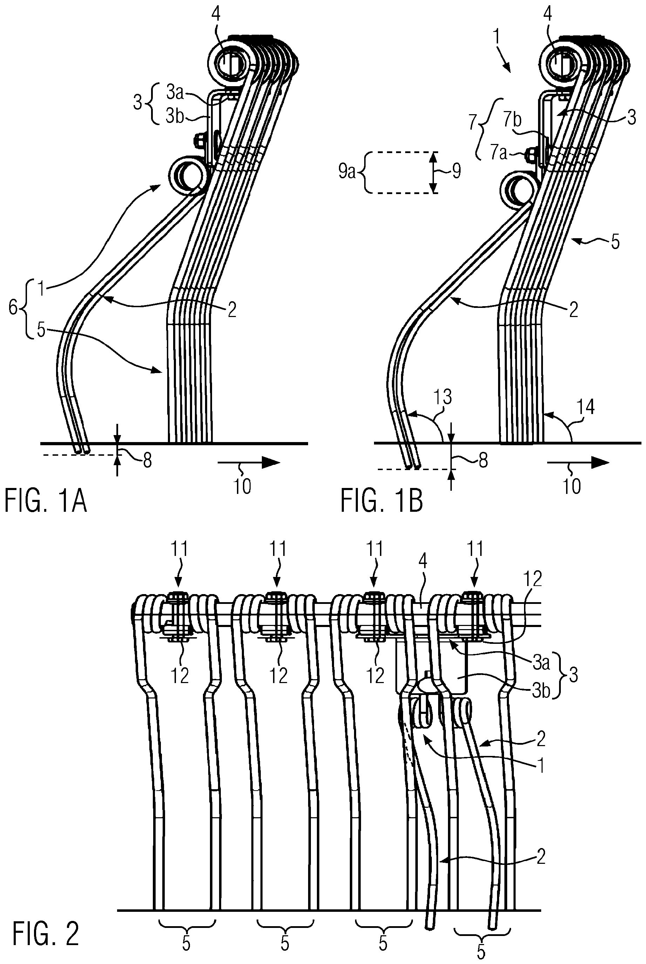

Wie die Figuren 1A und 1B erkennen lassen, umfasst der Bürstenzinken 1 einen Doppelzinken 2 und eine Halterung 3 zur Befestigung des Doppelzinkens 2 an einem zugeordneten Zinkenträger 4, der auch als Zinkenarm bezeichnet werden kann. Der Bürstenzinken 1 kann im Sinne einer Zusatzausstattung Federzinken 5 nachlaufend zugeordnet werden und bildet dann gemeinsam mit diesem eine Zinkenanordnung 6, auch Zinkenpaket genannt.

Der Bürstenzinken 1 umfasst gemäß bevorzugter Ausgestaltung eine in unterschiedlicher Höhe arretierbare Linearführung 7, mit der eine Zustellung 8 des Bürstenzinkens 1 im Sinne eines Überstands über die Federzinken 5 nach unten hin eingestellt werden kann. Beispielhaft ist die Zustellung 8 in der Figur 1A auf einen niedrigeren Wert eingestellt als in der Figur 1B. Ansonsten entsprechen die Fig. 1A und 1B einander, sodass einige Bezugszeichen der Übersichtlichkeit halber jeweils nur in einer dieser Figuren angegeben sind.

Anders gesagt ermöglicht die Linearführung 7 eine gegenseitige und vorzugsweise stufenlose Höhenverstellung 9 des Doppelzinkens 2 und der Halterung 3. Dies ist beispielsweise durch Verschieben einer Befestigungsschraube 7a für den Doppelzinken 2 in einem in der Halterung 3 ausgebildeten Langloch 7b möglich. Die arretierbare Linearführung 7 wird dann in Form einer Langloch-Verschraubung ausgebildet. Eine gleichmäßige Höheneinstellung der Bürstenzinken 1, kann beispielsweise mittels einer am Langloch 7b angeordneten Skala (nicht dargestellt) erleichtert werden.

Unter einer linearen Führung ist hier stets zu verstehen, dass sich die Neigung des Bürstenzinkens 1 bezüglich einer vereinfachend als horizontal angenommenen Arbeitsrichtung 10 bei der Höhenverstellung 9 nicht ändert. Dagegen wäre eine zusätzliche Verstellung quer zur Arbeitsrichtung 10 beispielsweise entlang eines entsprechend und gegebenenfalls sogar gekrümmt verlaufenden Langlochs 7b prinzipiell denkbar.

Eine stufenlose Höhenverstellung 9 ist beispielsweise dann vorteilhaft, wenn eine bestimmte Zustellung 8 bei graduell zunehmendem Verschleiß des Bürstenzinkens 1 eingestellt werden soll.

Die Halterung 3 kann einen ersten Befestigungsabschnitt 3a umfassen, der dem Bereich des Zinkenträgers 4 zugeordnet ist und bezüglich horizontaler Arbeitsrichtung 10 vorzugsweise in einem Winkel von 0 bis 30° und insbesondere parallel dazu ausgerichtet ist.

Ferner kann die Halterung 3 einen zweiten Befestigungsabschnitt 3b umfassen, der dem Doppelzinken 2 und insbesondere seiner Höhenverstellung 9 zugeordnet ist und bezüglich horizontaler Arbeitsrichtung 10 vorzugsweise in einem Winkel von 60 bis 90° und insbesondere vertikal ausgerichtet ist.

Die Halterung 3 ist beispielsweise ein orthogonaler Verstellwinkel, in dem wenigstens ein Langloch 7b als Bestandteil der Linearführung 7 ausgebildet ist. Die Figuren 1A und 1B zeigen eine entsprechend orthogonale Ausrichtung des ersten und zweiten Befestigungsabschnitts 3a, 3b zueinander bei idealisierter Arbeitsstellung des Bürstenzinkens 1 und der Federzinken 5.

Denkbar wären aber auch andere Formen der Linearführung 7 zur linearen (nicht schwenkenden) Höhenverstellung 9 und Arretierung des Doppelzinkens 2, beispielsweise eine durch Verklemmen oder Einrasten arretierbare Schienenführung des Doppelzinkens 2 an der Halterung 3, ein Spindeltrieb für den Doppelzinken 2 an der Halterung 3 oder dergleichen. Prinzipiell wäre hierfür auch ein feststehender Gewindebolzen denkbar, an dem der Doppelzinken 2 mittels einer Lasche linear geführt und beispielsweise beidseitig von zwei Muttern oder Distanzstücken und Mutter festgeklemmt werden kann. Die Linearführung 7 ist jedenfalls so ausgebildet, dass der Bürstenzinken 1 zur Höhenverstellung 9 nicht zerlegt und/oder vom Zinkenträger 4 gelöst werden muss.

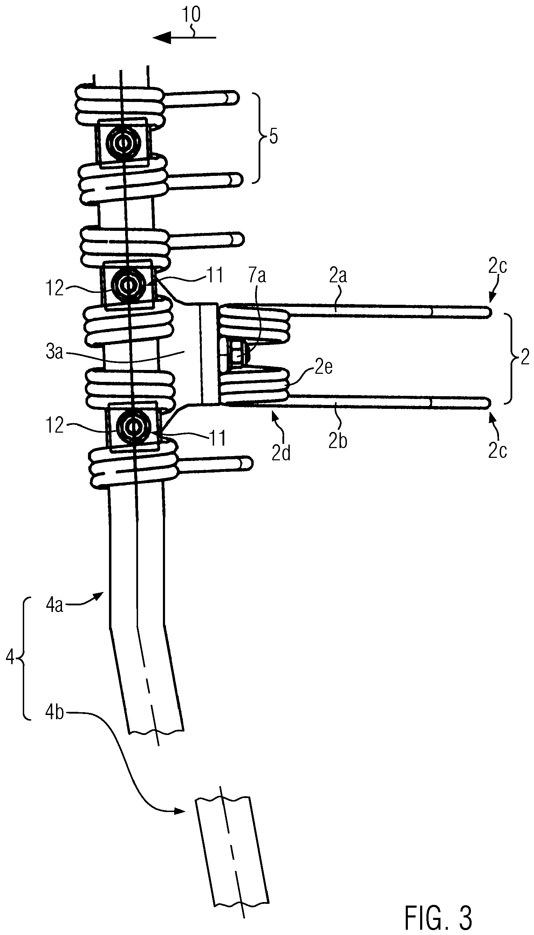

Wie die Figuren 2 und 3 erkennen lassen, ist der erste Befestigungsabschnitt 3a der Halterung 3 so ausgebildet, dass diese an wenigstens einem Befestigungspunkt 11, insbesondere an einem Durchgangsloch, des Zinkenträgers 4 gemeinsam mit wenigstens einem dem Doppelzinken 2 vorauslaufenden Federzinken 5 befestigt werden kann. Die Befestigung erfolgt hier vorzugsweise mittels einer Schraubverbindung 12 (Steckschraube und Mutter), was für Federzinken 5 und Zinkenträger 4 prinzipiell bekannt ist.

In den Figuren 1A, 1B, 2 und 3 ist ferner zu erkennen, dass die Doppelzinken 2 Zinkenschenkel 2a, 2b mit bezüglich horizontaler Arbeitsrichtung 10 schräg angestellten freien Endabschnitten 2c umfassen sowie einen befestigungsseitigen Abschnitt 2d und Federwindungen 2e, die den Zinkenschenkeln 2a, 2b zugeordnet sind und deren Federsteifigkeit auf prinzipiell bekannte Weise maßgeblich bestimmen.

Die Zinkenschenkel 2a, 2b spannen im Bereich ihrer freien Endabschnitte 2c einen stumpfen Anstellwinkel 13 mit der horizontalen Arbeitsrichtung 10 auf, der vorzugsweise größer ist als entsprechend definierte Anstellwinkel 14 der zugeordneten Federzinken 5.

Ein vertikaler Verstellbereich 9a (orthogonal zur horizontalen Arbeitsrichtung 10) der Höhenverstellung 9 beträgt beispielsweise 20 bis 60 mm (Verstellbereich 9a von beispielsweise +/- 10 bis +/- 30 mm) und insbesondere 30 bis 50 mm (beispielsweise +/- 15 bis +/-25 mm). Die Zustellung 8 (bespielhaft in den Figuren 1A und 1B gezeigter Überstand des Doppelzinkens 2) kann somit über den gesamten Verstellbereich 9a eingestellt und fixiert werden, insbesondere stufenlos. Die Zustellung 8 kann so gegebenenfalls auch unter Kompensation einer Zinkenabnutzung an unterschiedliche Bodeneigenschaften flexibel angepasst werden.

Wie in den Figuren 1A, 1B und 2 bis 4 beispielhaft dargestellt ist, können die Zinkenschenkel 2a, 2b des Doppelzinkens 2 im Wesentlichen identisch ausgebildet sein, also beispielsweise mit identischer Länge, identischer Formgebung und/oder identischer Federsteifigkeit. Es wäre aber auch denkbar, beispielsweise die Federsteifigkeit des im umlaufenden Arbeitsbetrieb jeweils außen angeordneten Zinkenschenkels 2a gegenüber dem inneren Zinkenschenkel 2b zu erhöhen, um einer im Arbeitsbetrieb nach außen hin in der Regel stärker ausgeprägten mechanischen Verformung des äußeren Zinkenschenkels 2a entgegenzuwirken. Dies ließe sich beispielsweise durch eine geringere Anzahl von Federwindungen 2e für den äußeren Zinkenschenkel 2a als für den inneren Zinkenschenkel 2b erzielen (nicht dargestellt).

Der Doppelzinken 2 besteht beispielsweise aus herkömmlichen Federstahl und kann durchweg einen Durchmesser von 8 mm oder 10 mm aufweisen. Im dargestellten Beispiel hat der Doppelzinken 2 einen kleineren Querschnitt als die Federzinken 5. Praktikabel sind beispielsweise Schenkeldurchmesser von 8 mm für den Doppelzinken 2 und von 10 mm für die Federzinken 5.

Prinzipiell ist es vorteilhaft, wenn die Federsteifigkeit des Doppelzinkens 2 geringer ist als diejenige der zugeordneten Federzinken 5. Dies lässt sich, wie voranstehend beschrieben ist, durch einen geringeren Drahtquerschnitt des Doppelzinkens 2 erzielen und/oder durch eine größere Anzahl von Federwindungen 2e als bei den zugeordneten Federzinken 5.

Der Verstellbereich 9a ist vorzugsweise so ausgelegt, dass auch bei einem zulässigen Verschleiß des Doppelzinkens 2 eine Zustellung 8 von wenigstens 10 mm bezüglich der Federzinken 5 in idealisierter Arbeitsstellung (wie beispielsweise in den Fig. 1A und 1B) möglich ist.

In den Figuren 1A, 1B, 2 und 3 ist der Bürstenzinken 1 an den Befestigungspunkten 11 für die beiden am weitesten innen am Zinkenträger 4 angeordneten Federzinken 5 gemeinsam mit diesen befestigt. Zum einen erstreckt sich der erste Befestigungsabschnitt 3a dann entlang des Zinkenträgers 4 über die beiden Befestigungspunkte 11 und die zugehörigen Verschraubungen 12.

Zum anderen ist diese Anordnung im Bereich der beiden innersten Federzinken 5 vorteilhaft, um möglichst wenig Schmutz mit dem Bürstenzinken 1 aufzunehmen und ins Schwad zu fördern. Zudem kann so vermieden werden, dass der Bürstenzinken 1 noch weiter innen, also innerhalb des innersten Zinkenkreises, angeordnet werden muss, wo er prinzipiell mit nicht rotierenden Fahrwerkskomponenten oder dergleichen Bauteilen kollidieren könnte.

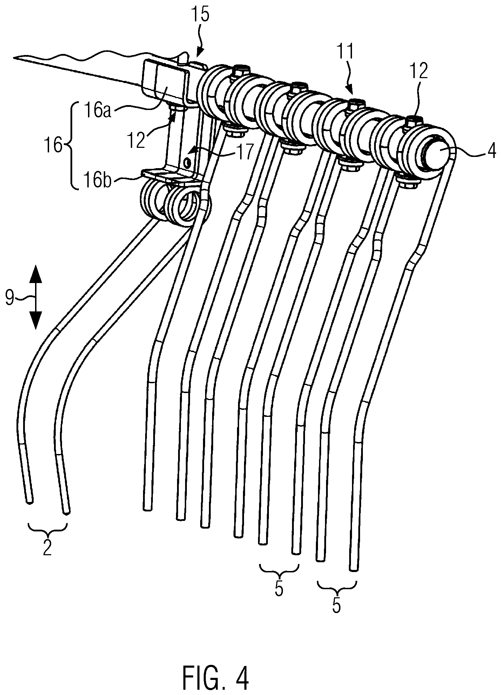

Dennoch wäre auch eine Anordnung des Bürstenzinkens 1 innerhalb des innersten Federzinkens 5 prinzipiell denkbar, wie in der Figur 4 beispielhaft zu erkennen ist. In diesem Fall ist für den Bürstenzinken 1 ein separater Befestigungspunkt 15 vorhanden. Auch dort ist die Befestigung des Bürstenzinkens 1 mittels prinzipiell bekannter Verschraubung 12 möglich.

In der Figur 4 ist eine zudem alternative Halterung 16 des Bürstenzinkens 1 angedeutet mit einem ersten Befestigungsabschnitt 16a für den Zinkenträger 4, mit einem zweiten Befestigungsabschnitt 16b für den Doppelzinken 2 und mit einer dazwischen ausgebildeten Linearführung 17, die beispielsweise korrespondierende Schienen und eine zugeordnete Arretierung (verdeckt) der jeweils eingestellten Zustellung 8 beispielsweise durch Klemmen oder Verschrauben umfasst.

In der Figur 3 ist zudem zu erkennen, dass der Zinkenträger 4 einen entgegen der Arbeitsrichtung 10 abgewinkelten äußeren Endbereich 4a aufweisen kann, in dem der Bürstenzinken 1 angeordnet ist, wobei die freien Endabschnitte 2c der Zinkenschenkel 2a, 2b in nach unten geschwenkter Arbeitsstellung bezüglich eines inneren Endbereichs 4b des Zinkenträger 4 zur Lagerung am zugeordneten Rotor / Kreisel nachlaufend angeordnet sind.

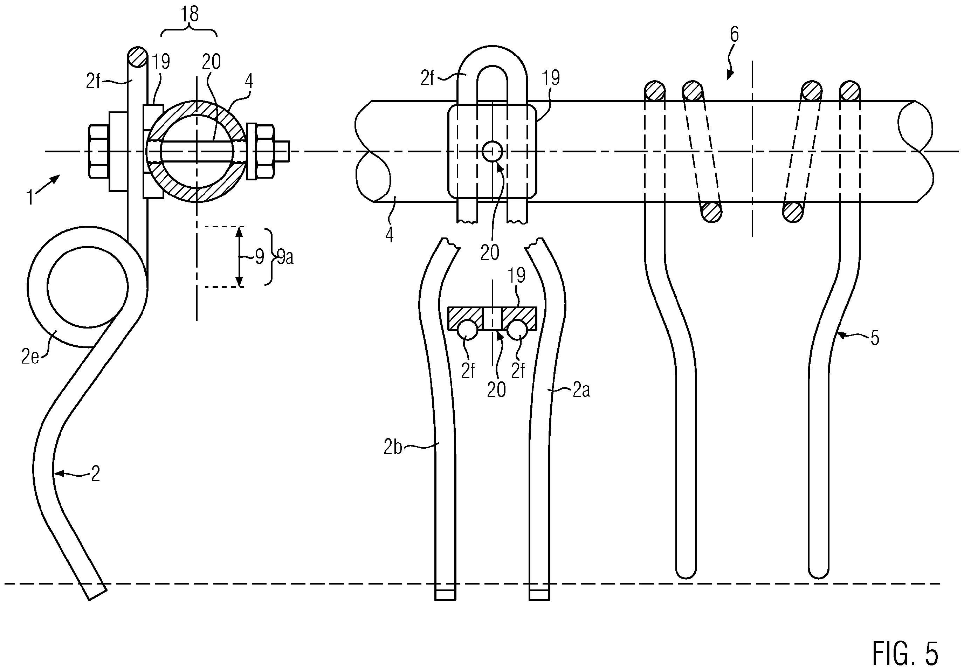

Die Figur 5 zeigt links eine Seitenansicht und rechts eine rückwärtige Ansicht des Bürstenzinkens 1 mit dem Doppelzinken 2 und einer alternativen Halterung 18 umfassend ein Klemmstück 19, beispielsweise ein sogenanntes Prismenklemmstück, und eine sowohl dieses als auch den Zinkenträger 4 durchdringende Horizontalverschraubung 20 zum vertikalen Verstellen und Festklemmen des Doppelzinkens 2 am Zinkenträger 4. Zusätzlich sind das Klemmstück 19 und der Doppelzinken 2 in einem gemeinsamen Horizontalschnitt dargestellt.

Eine am Doppelzinken 2 ausgebildete und die Zinkenschenkel 2a, 2b verbindende Befestigungsschlaufe 2f, welche in der abgesenkten Arbeitsstellung im Wesentlichen vertikal ausgerichtet ist, wird vom Prismenklemmstück 19 vertikal (linear) geführt, sodass der Doppelzinken 2 daran bei gelockerter Horizontalverschraubung 20 zur Höhenverstellung 9 vertikal verschoben werden kann. Durch Festziehen der Horizontalverschraubung 20 kann der Doppelzinken 2 am Zinkenträger 4 in der zuvor eingestellten Höhenlage fixiert werden.

Die Befestigungsschlaufe 2f erstreckt sich nach oben über die Federwindungen 2e (nur links dargestellt) hinaus und ist wenigstens so lang, dass der Bürstenzinken 2 daran mittels des Klemmstücks 19 am Zinkenträger 4 fixiert werden kann und die Höhenverstellung 9 über den (an anderer Stelle beschriebenen) Verstellbereich 9a möglich ist.

Die Höhenverstellung 9 ist bei dieser Ausführungsform prinzipiell stufenlos möglich. Zur genaueren und reproduzierbaren Höhenverstellung 9 sind dann beispielsweise Höhenmarkierungen (nicht dargestellt) an der Befestigungsschlaufe 2f denkbar. Auch ein schrittweises Einrasten der Befestigungsschlaufe 2f am Klemmstück 19 ist prinzipiell denkbar, beispielsweise mittels an der Befestigungsschlaufe 2f ausgebildeter Einkerbungen (nicht dargestellt).

Auch bei dieser Ausführungsform läuft der Bürstenzinken 2 als Zusatzzinken innerhalb eines zugeordneten Federzinkens 5 um, vorzugsweise am Innenkreis der diese jeweils umfassenden Zinkenanordnung 6.

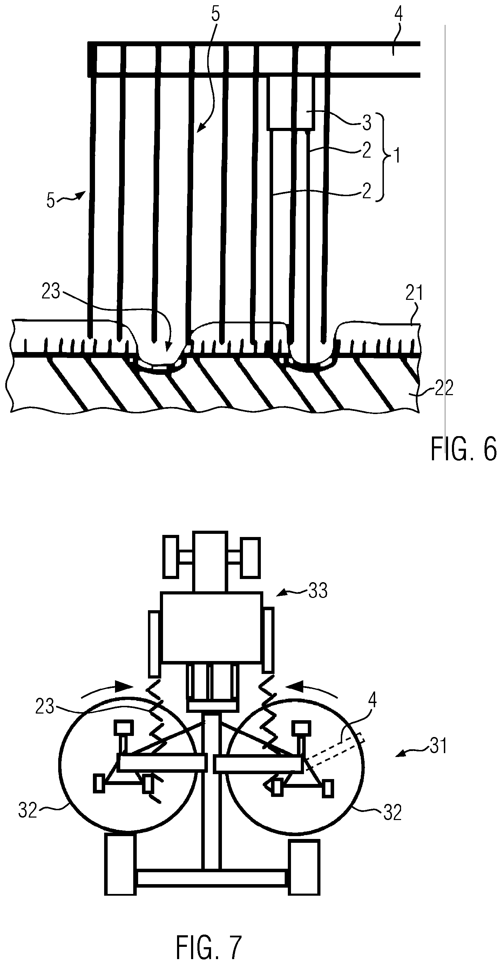

Die Figur 6 verdeutlicht die Wirkungsweise des Bürstenzinkens 1 in Kombination mit den Federzinken 5 beim Aufnehmen von Erntegut 21 von einem schematisch dargestellten Boden 22. Demnach überstreichen die Federzinken 5 den Boden 22 mit einer eingestellten Arbeitshöhe, nehmen dabei das Erntegut 21 auf und fördern es in ein (nicht dargestelltes) Schwad. Dargestellt sind schematisch ferner Schlepperspuren 23, die beispielhaft für Bodenvertiefungen sind, und in die die Federzinken 5 aufgrund der eingestellten Arbeitshöhe in der Regel nicht eingreifen können.

Aufgrund der eingestellten Zustellung 8 greifen jedoch die Bürstenzinken 1 in die Schlepperspuren 23 ein und nehmen dadurch dort vorhandenes und durch Befahren zusammengedrücktes Erntegut 21 auf. Aufgrund der vorzugsweise geringeren Federsteifigkeit der Bürstenzinken 1 im Vergleich zu den Federzinken 5 und der Anordnung der Bürstenzinken 1 im Bereich der innersten Federzinken 5 wird dabei vergleichsweise wenig Schmutz aufgenommen, so dass auch aus den Schlepperspuren 23 Erntegut 21 mit vergleichsweise guter Qualität aufgenommen und ins Schwad gefördert wird.

Die Figur 7 zeigt schematisch in der Draufsicht einen Kreiselschwader 31 mit zwei Kreiseln 32, an den jeweils Zinkenträger 4 (nur einer davon schematisch angedeutet) mit den (an anderer Stelle dargestellten) Federzinken 5 und Bürstenzinken 1 auf prinzipiell bekannte Weise umlaufen. Der Kreiselschwader 31 wird von einem Schlepper 33 gezogen, so dass der Kreiselschwader 31 auch die Bereiche der vom Schlepper 33 erzeugten Schlepperspuren 23 auf die beschriebene Weise bearbeitet.

Die beschriebenen Bürstenzinken 1 können hierbei als optionale Ausstattung des Kreiselschwaders 31 an den Zinkenträgern 4 befestigt und gegebenenfalls die Zustellung 8 an die jeweiligen Bodenverhältnisse und den Abnutzungsgrad der Bürstenzinken 1 angepasst werden. Dadurch ist eine einfache und gegebenenfalls individuell nachrüstbare Verbesserung des Arbeitsbetriebs und der damit erzeugten Erntegutqualität / Futterqualität gegeben.

Durch die im Vergleich zu den Federzinken 5 tiefere Anordnung der Bürstenzinken 1, also deren Zustellung 8, und den aggressiveren (stumpferen) Anstellwinkel 13 wird das eingepresste Emtegut 21 vom Boden 22 gelöst und auf das Schwad gefördert.

Die Federsteifigkeit der Bürstenzinken 1 ist dabei vorzugsweise geringer als diejenige der in der Zinkenanordnung 6 zugeordneten Federzinken 5. Außerdem ist der Bürstenzinken 1 nacheilend angeordnet, sodass er bei zunehmender Belastung nach oben/hinten ausweicht und auch so Futterverschmutzung vermeidet.

Falls der Bürstenzinken 1 den Boden 22 aufreißt, so fällt Schmutz aufgrund der innenliegenden Anordnung des Bürstenzinkens 1 vorrangig nach innen unter den Kreisel 32 und wird nicht ins Schwad gefördert.

Die Zustellung 8 kann durch die beschriebenen Höhenverstellung 9 flexibel an die jeweiligen Arbeitsbedingungen angepasst werden. Auch Abnutzung der Bürstenzinken 1 kann so kompensiert werden.

Bei gleicher Arbeitsqualität (vorgegebener Futterqualität) ist eine höhere Arbeitsgeschwindigkeit und Flächenleistung möglich.

## Patentansprüche

1. Bürstenzinken (1) für einen Kreiselschwader (31), umfassend einen Doppelzinken (2) und eine Halterung (3, 16, 18) zur Befestigung des Doppelzinkens an einem Zinkenträger (4), wobei der Bürstenzinken derart ausgebildet ist, dass die freien Endabschnitte (2c) des Doppelzinkens in nach unten geschwenkter Arbeitsstellung des Bürstenzinkens einen stumpfen Anstellwinkel (13) mit einer horizontalen Arbeitsrichtung (10) aufspannen, und wobei die Halterung und der Doppelzinken zur gegenseitigen linearen Höhenverstellung (9) ausgebildet sind.

2. Bürstenzinken nach Anspruch 1, wobei die Halterung (3) einen ersten Befestigungsabschnitt (3a) zur Befestigung der Halterung am Zinkenträger (4) und einen diesbezüglich nachlaufenden zweiten Befestigungsabschnitt (3b) zur Befestigung des Doppelzinkens (2) an der Halterung umfasst.

3. Bürstenzinken nach Anspruch 2, wobei der zweite Befestigungsabschnitt (3b) zur Höhenverstellung (9) des Doppelzinkens (2) ausgebildet ist.

4. Bürstenzinken nach Anspruch 2 oder 3, wobei der erste Befestigungsabschnitt (3a) im Bereich des Zinkenträgers (4) bezüglich horizontaler Arbeitsrichtung (10) in einem Winkel von höchstens 30° und insbesondere horizontal ausgerichtet ist, und wobei der zweite Befestigungsabschnitt (3b) im Bereich der Höhenverstellung (9) bezüglich horizontaler Arbeitsrichtung in einem Winkel von 60 bis 90° und insbesondere vertikal ausgerichtet ist.

5. Bürstenzinken nach einem der Ansprüche 2 bis 4, wobei der erste Befestigungsabschnitt (3a) derart ausgebildet ist, dass er an wenigstens einem Befestigungspunkt (11), insbesondere Durchgangsloch, des Zinkenträgers (4) gemeinsam mit wenigstens einem vorauslaufenden Federzinken (5) insbesondere mittels Schraubverbindung (12) befestigt werden kann.

6. Bürstenzinken nach wenigstens einem der vorigen Ansprüche, wobei an der Halterung (3) und dem Doppelzinken (2) zur gegenseitigen Höhenverstellung (9) eine Linearführung (7) mit oder in Form einer Langloch-Verschraubung ausgebildet ist.

7. Bürstenzinken nach Anspruch 1, wobei die Halterung (18) ein Klemmstück (19) und eine sowohl dieses als auch den Zinkenträger (4) durchdringende Horizontalverschraubung (20) umfasst zum höhenveränderlichen Festklemmen einer am Doppelzinken (2) vertikal verlaufenden Befestigungsschlaufe (2f) am Zinkenträger (4).

8. Bürstenzinken nach wenigstens einem der vorigen Ansprüche, wobei die Halterung (3) zur insbesondere stufenlosen Höhenverstellung (9) über einen Verstellbereich (9a) von 20 bis 60 mm ausgebildet ist.

9. Bürstenzinken nach wenigstens einem der vorigen Ansprüche, wobei der Doppelzinken (2) Zinkenschenkel (2a, 2b) mit identischer Länge und insbesondere Formgebung aufweist.

10. Bürstenzinken nach wenigstens einem der vorigen Ansprüche, wobei der bezüglich eines vorgesehenen umlaufenden Arbeitsbetriebs äußere Zinkenschenkel (2a) eine höhere Federsteifigkeit aufweist als der innere Zinkenschenkel (2b).

11. Zinkenanordnung (6) für einen Kreiselschwader (31), mit mehreren nebeneinander angeordneten Federzinken (5) und mit wenigstens einem Bürstenzinken (1) nach wenigstens einem der vorigen Ansprüche, wobei der Bürstenzinken den Federzinken nachlaufend angeordnet ist und eine geringere Federsteifigkeit aufweist als die Federzinken.

12. Zinkenanordnung nach Anspruch 11, wobei der Anstellwinkel (13) des Bürstenzinkens (1) größer ist als die Anstellwinkel (14) der Federzinken (5).

13. Zinkenanordnung nach Anspruch 11 oder 12, wobei der Bürstenzinken (1) für eine in der Arbeitsstellung über die Federzinken (5) nach unten überstehende Zustellung (8) von wenigstens 10 mm ausgebildet ist.

14. Zinkenanordnung nach einem der Ansprüche 11 bis 13, wobei der oder einer der Bürstenzinken (1) an Befestigungspunkten (11) für die innersten beiden Federzinken (5) gemeinsam mit diesen am Zinkenträger (4) befestigt ist.

15. Kreiselschwader mit mehreren Zinkenträgern (4) und daran angeordneten Bürstenzinken (1) nach wenigstens einem der Ansprüche 1 bis 10 und/oder Zinkenanordnungen (6) nach wenigstens einem der Ansprüche 11 bis 14.

16. Kreiselschwader nach Anspruch 15, wobei die Zinkenträger (4) einen entgegen der Arbeitsrichtung (10) abgewinkelten äußeren Endbereich (4a) aufweisen, in dem die Bürstenzinken (1) angeordnet sind, wobei die freien Endabschnitte (2c) der Doppelzinken (2) in nach unten geschwenkter Arbeitsstellung bezüglich eines inneren Endbereichs (4b) der Zinkenträger zu dessen Lagerung am zugeordneten Rotor / Kreisel (32) nachlaufend angeordnet sind.
